# EUROPÄISCHE PATENTANMELDUNG

(11) **EP 1 646 008 A1**
(43) Veröffentlichungstag der Anmeldung: **12.04.2006**
(21) Anmeldenummer: 05011836.3
(22) Anmeldetag: 01.06.2005
(51) Int. Cl.: G06T 7/00, G05D 1/00, G06K 9/00

(54) **Verfahren zur Erkennung von Hindernissen im Fahrweg eines Kraftfahrzeugs**

(30) Priorität: 11.10.2004 GB 0422504
(71) Anmelder: Delphi Technologies, Inc., Troy, MI 48007 (US)
(72) Erfinder: Ioffe, Alexander, Dr., 53229 Bonn (DE); Park, Su-Birm, 52457 Aldenhoven (DE); Ma, Guanglin, 45143 Essen (DE)
(74) Vertreter: Manitz, Finsterwald & Partner GbR

(57) **Zusammenfassung**

Die Erfindung betrifft ein Verfahren zur Erkennung eines sich in einem Fahrweg eines Kraftfahrzeugs befindlichen Hindernisses, insbesondere einer Person, bei dem mittels einer Kamera ein erstes Bild und zeitlich dazu beabstandet ein zweites Bild der in Fahrtrichtung liegenden Umgebung des Kraftfahrzeugs aufgenommen werden, ein erstes transformiertes Bild durch Projektion des ersten aufgenommenen Bildes aus der Kamerabildebene in die Ebene des Erdbodens und ein zweites transformiertes Bild durch Projektion des zweiten aufgenommenen Bildes aus der Kamerabildebene in die Ebene des Erdbodens erzeugt werden, ein Differenzbild aus dem ersten und zweiten transformierten Bild ermittelt wird, und durch Auswertung des Differenzbildes ermittelt wird, ob sich ein Hindernis im Fahrweg des Fahrzeugs befindet.

## Beschreibung

Die Erfindung betrifft ein Verfahren zur Erkennung eines sich in einem Fahrweg eines Kraftfahrzeugs befindlichen Hindernisses, insbesondere einer Person.

Ein derartiges Verfahren ist grundsätzlich bekannt und wird beispielsweise dazu verwendet, die Sicherheit von Passanten im Straßenverkehr zu erhöhen. So kann ein Airbag des Kraftfahrzeugs ausgelöst oder eine andere geeignete Sicherheitsmaßnahme ergriffen werden, sobald ein Zusammenstoß des Kraftfahrzeugs mit einem Fußgänger stattfindet oder kurz bevorsteht.

Bekannt ist die Erkennung von Hindernissen mit Hilfe von Sensoren, z.B. Beschleunigungssensoren und/oder Kontaktsensoren, die im Bereich einer Stoßstange eines Kraftfahrzeugs angeordnet sind. Derartige Sensoren ermöglichen jedoch eine Erkennung von Hindernissen nur dann, wenn sich diese in unmittelbarer Nähe zum Kraftfahrzeug befinden oder ein Kontakt, d.h. ein Zusammenprall, bereits stattgefunden hat.

Allgemein bekannt ist auch der Einsatz von Kameras in Kraftfahrzeugen, beispielsweise um als Einparkhilfe die Umgebung des Kraftfahrzeugs auf einem von dem Fahrer des Kraftfahrzeugs einsehbaren Display abzubilden.

Als problematisch erweisen sich bei dem Einsatz von Kameras grundsätzlich jedoch die Menge der zu verarbeitenden Bilddaten sowie die automatische Auswertung der erzeugten Bilder. Dies gilt umso mehr, wenn die Auswertung des Bildmaterials nicht nur automatisch, sondern auch noch besonders schnell zu erfolgen hat, wie es beispielsweise in einem Fahrzeugsicherheitssystem zum Schutz von Personen bei einem Zusammenstoß mit dem Kraftfahrzeug erforderlich ist.

Der Erfindung liegt die Aufgabe zugrunde, ein Verfahren zu schaffen, welches auf einfache Weise eine frühzeitige und schnelle Erkennung eines sich in einem Fahrweg eines Kraftfahrzeugs befindlichen Hindernisses, insbesondere einer Person, ermöglicht.

Zur Lösung der Aufgabe ist ein Verfahren mit den Merkmalen des Anspruchs 1 vorgesehen.

Bei dem erfindungsgemäßen Verfahren zur Erkennung eines sich in einem Fahrweg eines Kraftfahrzeugs befindlichen Hindernisses, insbesondere einer Person, wird mittels einer Kamera ein erstes Bild und dazu zeitlich beabstandet ein zweites Bild der in Fahrrichtung liegenden Umgebung des Kraftfahrzeugs aufgenommen. Durch Projektion des jeweiligen aufgenommenen Bildes aus der Kamerabildebene in die Ebene des Erdbodens werden aus dem ersten aufgenommenen Bild ein erstes transformiertes Bild und aus dem zweiten aufgenommenen Bild ein zweites transformiertes Bild erzeugt. Aus dem ersten und zweiten transformierten Bild wird anschließend ein Differenzbild ermittelt, welches dahingehend ausgewertet wird, ob sich ein Hindernis im Fahrweg des Fahrzeugs befindet.

Die Ermittlung von Hindernissen anhand von Differenzbildern ermöglicht die Verarbeitung und Auswertung von Bildern, die über keine räumliche Information verfügen. Dies erlaubt die Aufnahme der Bilder mittels einer Monokamera, die im Vergleich zu beispielsweise einer Stereokamera bei gleicher Bildgröße und Auflösung wesentlich kleinere Datenmengen erzeugt. Die Bilder einer Monokamera lassen sich somit nicht nur besonders schnell auswerten, sondern sie erfordern auch eine geringere Rechenleistung.

Erfindungsgemäß wird das Differenzbild nicht direkt aus den durch die Kamera aufgenommenen Bildern, die nachfolgend auch als Originalbilder bezeichnet werden, sondern aus transformierten Bildern ermittelt. Die transformierten Bilder werden dabei durch eine Projektion der Bildgegenstände aus der Bildebene der Originalbilder in die Ebene des Erdbodens erzeugt.

Durch die Projektion der durch die Kamera aufgenommenen Bilder auf den Erdboden wird aus einem rechteckigen Bildformat ein trapezförmiges Bildformat, wobei die kurze Parallelseite des Trapezes den fahrzeugnahen Bildbereich und die lange Parallelseite des Trapezes den fahrzeugfernen Bildbereich begrenzt.

Die Bildtransformation führt zu einer korrekten, d.h. im Wesentlichen verzerrungsfreien, Abbildung des Erdbodens in dem transformierten Bild, wohingegen Bildgegenstände, wie beispielsweise Menschen, die sich in Wirklichkeit vom Erdboden abheben und z.B. senkrecht dazu erstrecken, in dem transformierten Bild verzerrt und insbesondere keilförmig dargestellt werden.

Durch die selektive Verzerrung von Bildgegenständen, die nicht dem Erdboden zuzuordnen sind, lassen sich Bildgegenstände, die als mögliches Hindernis für das Kraftfahrzeug in Betracht kommen, besonders gut von solchen, die nicht sicherheitsrelevant sind, unterscheiden. Dies ermöglicht eine besonders zuverlässige Erkennung von Hindernissen, insbesondere von Passanten.

Bei der Auswertung des aus zwei zeitlich zueinander beabstandeten Bildern ermittelten Differenzbildes wird der Effekt ausgenutzt, dass sich die Abbildung eines Objekts, welches dem Fahrzeug näher ist, bei sich bewegendem Kraftfahrzeug stärker verändert und insbesondere schneller größer wird, als ein Objekt, welches vom Kraftfahrzeug weiter entfernt ist. Auf diese Weise kann ein sich im Bildvordergrund befindliches Objekt von beispielsweise einem sich im Bildhintergrund befindlichen Objekt unterschieden und ggf. als Hindernis identifiziert werden.

Vorteilhafte Ausbildungen der Erfindung sind den Unteransprüchen, der Beschreibung und der Zeichnung zu entnehmen.

Gemäß einer vorteilhaften Ausführungsform wird die Fahrzeugbewegung, insbesondere die Fahrzeuggeschwindigkeit und/oder eine Fahrtrichtungsänderung, bei der Erzeugung der transformierten Bilder berücksichtigt. Auf diese Weise wird einer Änderung der Kamerablickrichtung bei einer Bewegung des Kraftfahrzeugs Rechnung getragen. Dies führt zu besser vergleichbaren transformierten Bildern, wodurch letztlich die Zuverlässigkeit einer korrekten Erkennung eines Hindernisses erhöht ist.

Bevorzugt werden die Fahrzeugbewegung, insbesondere die Fahrzeuggeschwindigkeit und/oder eine Fahrtrichtungsänderung, und der zeitliche Abstand, mit dem die Bilder aufgenommen wurden, bei der Ermittlung des Differenzbildes berücksichtigt. Dies ermöglicht eine korrekte Positionierung zeitlich beabstandeter transformierter Bilder relativ zueinander und somit einen optimalen Vergleich der transformierten Bilder.

Im Ergebnis weist das Differenzbild einen maximalen Kontrast zwischen sich nicht wesentlich verändernden Bildgegenständen, wie z.B. einem in Fahrtrichtung liegenden Straßenabschnitt, und schnell größer werdenden Bildgegenständen auf. Das transformierte Abbild eines Objekts, welches in Wirklichkeit über den Erdboden hinausragt, lässt sich somit noch besser vom Untergrund unterscheiden. Dadurch ist eine noch zuverlässigere Erkennung von Hindernissen möglich.

Vorteilhafterweise wird jeweils das erste oder das zweite transformierte Bild entsprechend der Fahrzeugbewegung und des zeitlichen Abstandes, mit dem die zugehörigen Originalbilder aufgenommen wurden, relativ zum jeweils zweiten bzw. ersten transformierten Bild verschoben und/oder verdreht, um jeweils gleiche Ausschnitte der Fahrzeugumgebung in Deckung zu bringen. Dadurch wird sichergestellt, dass bei der Ermittlung des Differenzbildes die Differenz der Grauwerte von solchen Bildpunkten gebildet wird, die zumindest annähernd gleichen Orten der Fahrzeugumgebung entsprechen.

Bildpunkte von solchen Objekten, die sich vom ersten transformierten Bild zum zweiten transformierten Bild nicht wesentlich verändert haben, wie z.B. das Abbild einer Straße, werden bei der Differenzbildung also eliminiert und ergeben im Differenzbild einen Grauwert von zumindest annähernd Null. Lediglich die Bildpunkte solcher Objekte, die sich in der näheren Fahrzeugumgebung befinden und die über den Erdboden hinausragen und deshalb in den transformierten Bildern verzerrt und insbesondere keilförmig dargestellt sind, können bei sich auf das Objekt zu bewegendem Fahrzeug nicht in Deckung gebracht werden. Da das Abbild des Objekts bei sich näherndem Fahrzeug immer größer wird, weisen zumindest die den Randbereich des Objekts im Differenzbild bildenden Bildpunkte einen sich deutlich von Null unterscheidenden Grauwert auf. Dadurch ist ein über den Erdboden hinausragendes Objekt mit noch größerer Sicherheit vom Untergrund unterscheidbar und ein Hindernis noch zuverlässiger ermittelbar.

Bevorzugt wird ein, insbesondere keilförmiges, Objekt des Differenzbildes als Hindernis eingestuft. Wie bereits erwähnt wurde, handelt es sich bei einem Objekt des Differenzbildes um ein Objekt, dessen Bildpunkte sich bei der Differenzbildung nicht eliminiert haben. Die transformierte Abbildung eines derartigen Objekts muss sich also von einem transformierten Bild zum nächsten ändern, insbesondere vergrößern. Dies ist gerade dann der Fall, wenn es sich hierbei um die Abbildung eines sich in der näheren Fahrzeugumgebung befindlichen und über den Erdboden hinausragenden Objekts handelt. Sofern sich dieses Objekt im Fahrweg des Kraftfahrzeugs befindet, muss es als ein Hindernis für das Kraftfahrzeug angesehen werden.

Ein als Hindernis eingestuftes Objekt des Differenzbildes kann in die aufgenommenen Bilder zurücktransformiert werden. Dies ermöglicht es, ein als Hindernis eingestuftes Objekt auch in den aufgenommenen Bildern als solches kenntlich zu machen, beispielsweise durch eine entsprechende Einfärbung oder eine Umrahmung.

Vorteilhafterweise wird die Kamera so ausgerichtet, dass die Horizontlinie durch die aufgenommenen Bilder verläuft. Ein sich nah genug am Fahrzeug befindliches und/oder ausreichend hoch über den Erdboden erstreckendes Objekt wird in den aufgenommenen Bildern somit stets die Horizontlinie schneiden. Das Durchkreuzen der Horizontlinie kann folglich als ein zusätzliches Kriterium bei der Einstufung eines ermittelten Objekts als Hindernis herangezogen werden.

Besonders bevorzugt ist es, wenn nur derjenige Bereich eines aufgenommenen Bildes auf den Erdboden projiziert wird, der sich ausgehend von der Horizontlinie unterhalb der Horizontlinie befindet. Eine Projektion des aufgenommenen Bildbereiches oberhalb der Horizontlinie, z.B. des Himmels, auf den Erdboden wird mit anderen Worten ausgeschlossen. Das transformierte Bild umfasst somit nur den unterhalb der Horizontlinie liegenden Bereich der abgebildeten Fahrzeugumgebung. Auf diese Weise wird die Menge der zu verarbeitenden Bilddaten erheblich reduziert. Dies ermöglicht eine Durchführung des Verfahrens mit einer geringeren Rechenleistung und/oder eine beschleunigte Verarbeitung der aufgenommenen Bilder, d.h. eine schnellere Ermittlung von Hindernissen.

Gemäß einer weiteren vorteilhaften Ausführungsform wird das Differenzbild ausgehend von einem Rand des Differenzbildes ausgewertet, welcher im Bereich der Horizontlinie liegt. Zunächst wird also geprüft, ob das Differenzbild ein Objekt umfasst, welches im Bereich der Horizontlinie liegt, d.h. in den Originalbildern die Horizontlinie schneidet. Nur ein solches Objekt kommt als Hindernis für das Kraftfahrzeug überhaupt in Betracht.

Liefert die Auswertung im Randbereich des Differenzbildes kein Ergebnis, d.h. keine Bildpunkte mit sich deutlich von Null unterscheidenden Grauwerten, so wird von einer weiteren Auswertung des Differenzbildes abgesehen. Eine vollständige Auswertung des Differenzbildes erfolgt allenfalls dann, wenn bereits im Randbereich des Differenzbildes ein Objekt detektiert wird. Auf diese Weise wird eine überflüssige Auswertung von objektfreien Differenzbildern vermieden. Dies ermöglicht eine noch schnellere Durchführung des Verfahrens bzw. erfordert eine noch geringere Rechenleistung.

Vorzugsweise wird bei Detektion eines Objekts im Bereich der Horizontlinie eine weitere Auswertung des Differenzbildes auf den Bereich des Objekts beschränkt. Das Differenzbild wird mit anderen Worten selbst dann nicht vollständig ausgewertet, wenn ein Objekt im Randbereich des Differenzbildes detektiert wird. Vielmehr erfolgt die Auswertung des Differenzbildes selektiv, nämlich gezielt in dem Bildbereich, in dem sich das Objekt erstreckt. Eine überflüssige Auswertung von objektfreien Bildbereichen des Differenzbildes wird somit vermieden. Die Effizienz der Bildauswertung ist dadurch noch weiter erhöht, so dass eine noch schnellere Erkennung eines Hindernisses möglich bzw. eine noch geringere Rechenleistung erforderlich ist.

Gemäß einer weiteren Ausführungsform wird ein Bildrauschen des Differenzbildes durch die Berücksichtigung einer tatsächlichen Neigung der Kamera bezüglich des Erdbodens minimiert. Auf diese Weise werden unbeabsichtigte Verkippungen der Kamera ausgeglichen, die beispielsweise beim Fahren auf einem unebenen Untergrund vorkommen können. Durch die Minimierung des Bildrauschens wird der Kontrast des Differenzbildes noch weiter erhöht, so dass ein als Hindernis einzustufendes Objekt noch zuverlässiger ermittelbar ist.

Bevorzugt wird die tatsächliche Kameraneigung aus dem Differenzbild bestimmt. Grundsätzlich lässt sich die jeweils vorliegende Kameraneigung auch mittels geeigneter Sensoren, z.B. Beschleunigungssensoren, feststellen. Im Vergleich dazu ist die rechnerische Ermittlung der Kameraneigung aus dem Differenzbild jedoch schnell durchführbar.

Vorteilhafterweise wird die Summe der Grauwerte der Pixel des Differenzbildes entlang einer gedachten, vom Fahrzeug ausgehenden und nicht durch ein detektiertes Objekt verlaufenden Linie gebildet und durch eine Variation der zugrundegelegten Kameraneigung minimiert. In einem objektfreien Bereich des Differenzbildes wird gewissermaßen also eine eindimensionale Varianzanalyse der Kameraneigung durchgeführt.

Dabei kann die Kameraneigung, die zu einer minimalen Summe der Grauwerte führt, als tatsächliche Kameraneigung betrachtet werden.

Vorteilhafterweise wird das Differenzbild unter Berücksichtigung der tatsächlichen Kameraneigung neu ermittelt und/oder ein nachfolgendes Differenzbild unter Berücksichtigung der tatsächlichen Kameraneigung ermittelt. Nach Bestimmung der tatsächlichen Kameraneigung kann das Differenzbild, anhand dessen die tatsächliche Kameraneigung bestimmt wurde, also korrigiert werden, um ein rauschärmeres Differenzbild zu erzeugen. Alternativ oder zusätzlich kann die tatsächliche Kameraneigung solange der Ermittlung nachfolgender Differenzbilder zugrundegelegt werden, bis eine wiederum geänderte tatsächliche Kameraneigung bestimmt wird.

Weiterer Gegenstand der Erfindung ist eine Vorrichtung zur Erkennung eines sich in einem Fahrweg eines Kraftfahrzeugs befindlichen Hindernisses, insbesondere einer Person, mit den Merkmalen des Anspruchs 17.

Mit Hilfe der Vorrichtung ist das erfindungsgemäße Verfahren durchführbar, und es lassen sich die voranstehend genannten Vorteile erreichen.

Nachfolgend wird die Erfindung rein beispielhaft anhand einer vorteilhaften Ausführungsform unter Bezugnahme auf die Zeichnung beschrieben. Es zeigen:
- Fig. 1: den Strahlengang bei einer Abbildung eines Straßenstücks auf eine Bildebene einer Kamera einer erfindungsgemäßen Vorrichtung;
- Fig. 2: die Transformation eines aufgenommenen Bildes in ein transformiertes Bild;
- Fig. 3: den Strahlengang einer Abbildung eines Hindernisses auf die Bildebene einer Kamera einer erfindungsgemäßen Vorrichtung zu zwei unterschiedlichen Zeitpunkten;
- Fig. 4: zwei zeitlich zueinander beabstandete transformierte Bilder bei einem sich bewegendem Kraftfahrzeug; und
- Fig. 5: ein transformiertes Bild mit einem als Hindernis einzustufenden Objekt.

Bei dem erfindungsgemäßen Verfahren zur Ermittlung eines sich in einem Fahrweg eines Kraftfahrzeugs 10 befindlichen Hindernisses 12 werden mittels einer Kamera 14 mehrere zeitlich zueinander beabstandete Bilder 16 der in Fahrtrichtung liegenden Umgebung des Kraftfahrzeuges 10 aufgenommen. Bei der Kamera 14 handelt es sich um eine Monokamera, beispielsweise um eine Monovideokamera, die in einem vorderen Bereich des Kraftfahrzeugs 10, beispielsweise im Bereich eines Rückspiegels des Kraftfahrzeugs 10, angeordnet ist und in einen vor dem Fahrzeug 10 liegenden Bereich der Fahrzeugumgebung ausgerichtet ist. Alternativ oder zusätzlich ist es auch möglich, eine nach hinten ausgerichtete Kamera vorzusehen, die einen hinter dem Kraftfahrzeug 10 liegenden Umgebungsbereich überwacht.

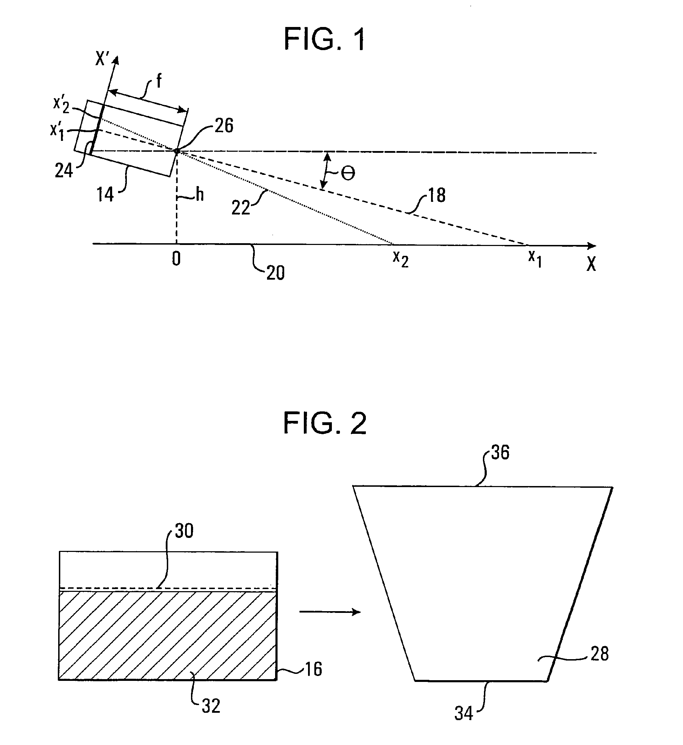

Wie Fig. 1 zeigt, ist die Kamera 14 im Ruhezustand des Kraftfahrzeugs 10 nicht exakt horizontal ausgerichtet, sondern um einen Winkel θ nach unten geneigt, so dass die optische Achse 18 der Kamera 14 in einem vor dem Kraftfahrzeug 10 liegenden Punkt xi auf den Erdboden 20 trifft. Wie durch die optische Achse 18 und die gepunktete Linie 22 dargestellt ist, wird der zwischen x₁ und x₂ liegende Bereich des Erdbodens 20 als ein zwischen den Punkten x'₁ und x'2 liegender Bereich auf eine Bildebene 24 der Kamera 14 abgebildet. Der Punkt 26 bezeichnet den Fokus der Kamera 14, welcher sich in einer Höhe h über dem Erdboden 20 befindet.

Um zu ermitteln, ob sich im Fahrweg des Kraftfahrzeugs 10 ein Hindernis befindet, wird mittels einer Transformationseinheit aus jedem aufgenommenen Bild 16 zunächst ein transformiertes Bild 28 erzeugt. Grundsätzlich ist es auch möglich, nur jedes n-te aufgenommene Bild 16 zu transformieren, wobei n eine natürliche Zahl größer als 1 ist. Die Häufigkeit der Transformation kann des weiteren von der Rate; mit der die Bilder 16 aufgenommen werden, abhängig sein oder in Abhängigkeit von z.B. der Fahrzeuggeschwindigkeit oder der Stärke der Fahrtrichtungsänderung variiert werden.

Die Transformation erfolgt durch eine Projektion des aufgenommenen Bildes 16 aus der Bildebene 24 in die Ebene des Erdbodens 20. Dabei wird nicht das gesamte Bild 16 transformiert, sondern lediglich ein unterhalb der durch das Bild 16 verlaufenden Horizontlinie 30 liegender Bereich 32, der in Fig. 2 schraffiert dargestellt ist. Der oberhalb der Horizontlinie 30 liegende Bereich des Bildes 16, der im Falle einer ebenen Landschaft den Himmel abbildet, bleibt von der Transformation ausgeschlossen.

Während das aufgenommene Bild 16 im wesentlichen rechteckig ist, führt die Transformation zu einer trapezförmigen Gestalt des transformierten Bildes 28. Dabei begrenzt die kürzere Parallelseite 34 den fahrzeugnahen Bereich des transformierten Bildes 28 und die längere Parallelseite 36 den horizontnahen Bildbereich.

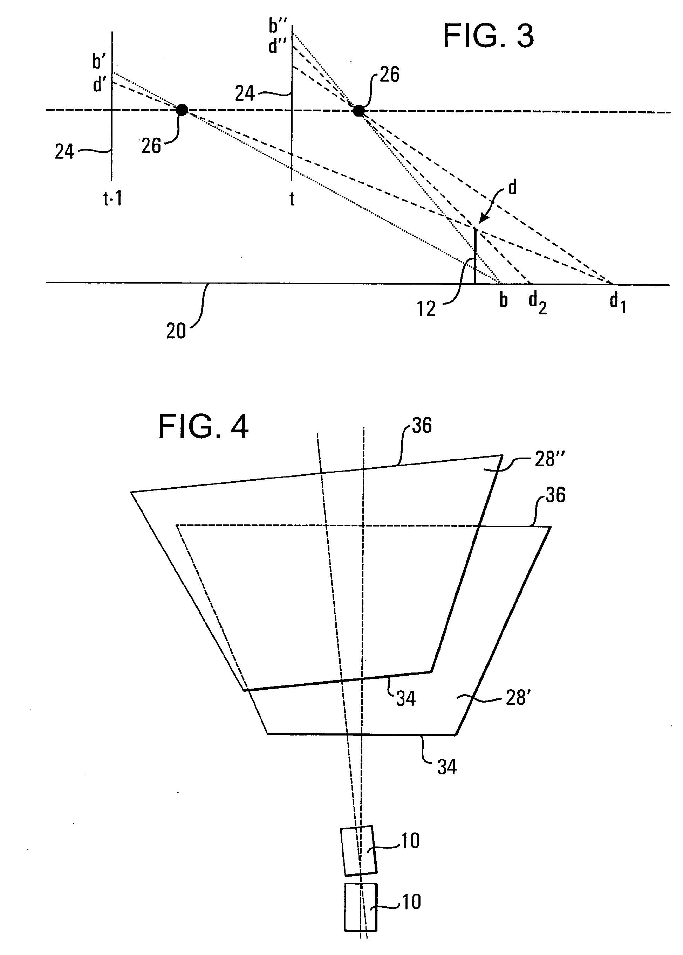

In Fig. 3 ist die Projektion des aufgenommenen Bildes 16 aus der Bildebene 24 in die Ebene des Erdbodens 20 näher erläutert.

Zu einem Zeitpunkt t-1 befindet sich das Kraftfahrzeug 10 in einer gewissen Entfernung zu einem Hindernis 12. Der Punkt d des Hindernisses 12 wird zum Zeitpunkt t-1 auf den Punkt d' in der Bildebene 24 abgebildet. Ein auf dem Erdboden 20 befindlicher Punkt b wird in einem Punkt b' abgebildet. Um die Punkte b' und d' aus der Bildebene 24 in die Ebene des Erdbodens 20 zu projizieren, wird die Gerade, die durch den Punkt b' bzw. d' und dem Fokus 26 verläuft, so weit verlängert, bis sie die Ebene des Erdbodens 20 schneidet. Dieser Schnittpunkt bezeichnet den jeweiligen transformierten Bildpunkt b bzw. d₁ eines ersten transformierten Bildes 28'.

Ein vorbestimmtes Zeitintervall später, nämlich zum Zeitpunkt t, wird ein weiteres Bild 16 der Fahrzeugumgebung aufgenommen. Da sich das Kraftfahrzeug 10 in der Zwischenzeit dem Hindernis 12 angenähert hat, wird der Punkt d des Hindernisses 12 nun im Punkt d" der Bildebene 24 abgebildet. Ebenso wird der Punkt b des Erdbodens 20 im Punkt b" der Bildebene 24 abgebildet. Die Projektion der abgebildeten Punkte b" und d" in die Ebene des Erdbodens 20 resultiert in den Bildpunkten b und d₂ eines zweiten transformierten Bildes 28".

Wie Fig. 3 zu entnehmen ist, verkürzt sich der Relativabstand zwischen dem Punkt d₁ bzw. d₂ des Hindernisses 12 und dem Punkt b des Erdbodens 20 vom ersten zum zweiten transformierten Bild 28, und zwar umso mehr, je näher das Kraftfahrzeug dem Hindernis 12 kommt. Mit zunehmender Annäherung des Kraftfahrzeugs 10 an das Hindernis 12 ändert sich also die Gestalt des Hindernisses 12 in den transformierten Bildern 28, wohingegen die Abbildung des Erdbodens 20 in den transformierten Bildern 28 im Wesentlichen gleich bleibt.

Durch den Vergleich der transformierten Bilder 28 zweier zeitlich versetzt aufgenommener Bilder 16 lässt sich somit feststellen, ob sich ein Hindernis 12 im Fahrweg des Kraftfahrzeugs 10 befindet oder nicht. Als Hindernis 12 werden dabei solche Objekte gewertet, die signifikant über den Erdboden 20 hinausragen, da nur solche Objekte bei herannahendem Kraftfahrzeug 10 ihre Größe in den transformierten Bildern 28 signifikant ändern. Dies ist beispielsweise bei Fußgängern der Fall.

Zum Vergleich zweier transformierter Bilder 28 wird mittels einer Differenzbildungseinheit ein Differenzbild aus zwei, beispielsweise zeitlich unmittelbar aufeinanderfolgenden, transformierten Bildern 28', 28" erzeugt. Die Grauwerte der einzelnen Bildpixel des Differenzbildes entsprechen dabei gerade der Differenz der Grauwerte der entsprechenden Pixel des früheren und des späteren transformierten Bildes 28', 28".

Um zu verhindern, dass die Differenz zwischen Bildpunkten gebildet wird, die jeweils unterschiedliche Bereiche der Fahrzeugumgebung abbilden, werden die transformierten Bilder 28', 28" korrekt zueinander positioniert. Die Positionierung der transformierten Bilder 28', 28" erfolgt dabei nicht nur unter Berücksichtigung des zeitlichen Abstandes, unter dem die zugehörigen Bilder 16 aufgenommen wurden, sondern auch unter Berücksichtigung der Fahrzeugbewegung, insbesondere der Geschwindigkeit des Kraftfahrzeugs 10 und einer etwaigen Fahrtrichtungsänderung.

In Fig. 4 ist ein Kraftfahrzeug 10 dargestellt, welches sich vorwärts bewegt und dabei eine Linkskurve beschreibt. Entsprechend ist ein späteres transformiertes Bild 28" im Vergleich zu einem früheren transformierten Bild 28' nicht nur in Fahrtrichtung und nach links versetzt, sondern auch entgegen dem Uhrzeigersinn verdreht. Damit die Bildpunkte, deren Grauwerte jeweils subtrahiert werden, in beiden transformierten Bildern 28' und 28" gleiche Bereiche der Fahrzeugumgebung wiedergeben, werden die transformierten Bilder 28' und 28" durch eine entsprechende Translation und Rotation des früheren und/oder späteren transformierten Bildes 28', 28" zur Deckung gebracht.

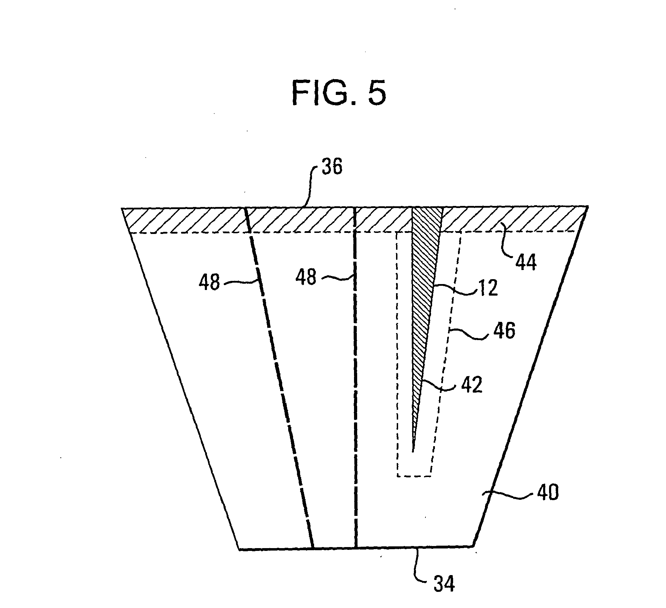

In Fig. 5 ist ein so erzeugtes Differenzbild 40 dargestellt. Der weiße Bereich des Differenzbildes stellt einen Bereich dar, in welchem sich die Bildpunkte der transformierten Bilder 28', 28" eliminiert haben, d.h. in welchem die Differenz der Grauwerte der Pixel zumindest annähernd Null beträgt.

Der keilförmige dunkle Bereich 42 stellt ein Hindernis 12 dar. In diesem Bereich haben sich die Pixel nicht eliminiert, da sich die Grauwerte der Bildpunkte der transformierten Bilder 28', 28" in diesem Bereich erheblich voneinander unterschieden haben. Der Abstand zwischen der Spitze des keilförmigen Bereichs 42 und der kürzeren Parallelseite 34 des Differenzbildes 40 gibt die Entfernung des Hindernisses 12 zu dem Kraftfahrzeug 10 an.

Die Auswertung des Differenzbildes 40 erfolgt mittels einer Auswerteeinheit, und zwar ausgehend von der längeren Parallelseite 36 in einem horizontnahen, sich über die gesamte Breite des Differenzbildes 40 erstreckenden Bildbereich 44, der in Fig. 5 schraffiert dargestellt ist.

Die Erfahrung hat gezeigt, dass bestimmte Klassen von sicherheitsrelevanten Hindernissen 12 soweit über den Erdboden 20 hinausragen, dass sie in dem aufgenommenen Bild 16 die Horizontlinie 30 schneiden. Wenn sich ein solches Hindernis 12 in dem überwachten Umgebungsbereich des Kraftfahrzeugs 10 befindet, wird es folglich wenigstens in dem horizontnahen Bildbereich 44 des Differenzbildes 40 abgebildet. Um die Auswertung des Differenzbildes 40 zur Detektion derartiger Hindernisse zu beschleunigen und die benötigte Rechenleistung zu minimieren, ist es also ausreichend, zunächst den horizontnahen Randbereich 44 des Differenzbildes auf solche Pixel hin zu untersuchen, deren Grauwerte sich deutlich von Null unterscheiden.

Werden solche Bildpunkte in dem Randbereich 44 nicht detektiert, so wird die Auswertung des vorliegenden Differenzbildes 40 abgebrochen.

Werden bei der Analyse des horizontnahen Randbereiches 44 hingegen Pixel ermittelt, deren Grauwerte sich deutlich von Null unterscheiden, so wird die Auswertung des Differenzbildes 40 fortgesetzt. Dabei erstreckt sich die weitere Analyse des Differenzbildes 40 jedoch nicht mehr über die gesamte Breite des Differenzbildes 40, sondern sie wird auf einen den keilförmigen Bereich 42 umgebenden Bereich 46 beschränkt. Die Auswertung des Differenzbildes 40 wird mit anderen Worten nur in dem Bildbereich 46 fortgesetzt, in dem sich das ermittelte Abbild des Hindernisses 12 befindet. Dass selbst bei Detektion eines Hindernisses 12 nicht das gesamte Differenzbild 40 analysiert wird, trägt weiter dazu bei, die Bildauswertung zu beschleunigen und die erforderliche Rechenleistung gering zu halten.

Um die Qualität der Bildauswertung und die Zuverlässigkeit, mit der ein Objekt des Differenzbildes 40 als ein Hindernis 12 erkannt wird, zu erhöhen, wird das Bildrauschen des Differenzbildes 40, welches aus geringfügigen Änderungen des Neigungswinkels θ der Kamera 14 resultiert, minimiert, indem die jeweils tatsächlich vorliegende Neigung der Kamera 14 bei der Erzeugung des Differenzbildes 40 berücksichtigt wird.

Die tatsächliche Neigung der Kamera 14 wird dabei aus dem Differenzbild 40 selbst bestimmt. Zu diesem Zweck wird die Summe der Grauwerte der Pixel des Differenzbildes 40 entlang einer gedachten, vom Fahrzeug 10 ausgehenden, nicht durch ein detektiertes Objekt 42 verlaufenden und sich in Richtung des Horizonts erstreckenden Geraden 48 gebildet. Die Gerade 48 reicht mit anderen Worten von der kürzeren Parallelseite 34 bis zur längeren Parallelseite 36 des Differenzbildes 40, ohne dabei ein als Hindernis 12 einzustufendes Objekt 42 zu schneiden. In Fig. 5 sind zwei Geraden 48 dargestellt, die sich beide jeweils für die Bestimmung der tatsächlichen Kameraneigung eignen.

Nachdem die Summe der Pixelgrauwerte entlang der Geraden 48 bestimmt wurden, wird die zugrundegelegte Kameraneigung rechnerisch variiert, um die Summe der Grauwerte zu minimieren. Der Kameraneigungswinkel, bei welchem die Summe der Pixelgrauwerte minimal ist, gibt die dem vorliegenden Differenzbild 40 zugrundezulegende tatsächliche Neigung der Kamera 14 an. Es wird gewissermaßen also eine eindimensionale Varianzanalyse der Kameraneigung durchgeführt.

Unter Berücksichtigung der neu ermittelten, tatsächlichen Kameraneigung lässt sich ein korrigiertes Differenzbild 40 erzeugen, welches ein im Vergleich zu dem ursprünglichen Differenzbild 40 reduziertes Bildrauschen aufweist. Aufgrund des unterdrückten Bildrauschens sind auch solche Objekte des Differenzbildes 40 noch erkennbar, deren Pixelgrauwerte aus dem erhöhten Rauschen nicht herausragten. Durch die Reduzierung des Bildrauschens wird die Qualität der Bildauswertung und somit die Zuverlässigkeit der Erkennung eines Hindernisses also noch weiter erhöht.

### Bezugszeichenliste

- 10: Kraftfahrzeug
- 12: Hindernis
- 14: Kamera
- 16: aufgenommenes Bild
- 18: optische Achse
- 20: Erdboden
- 22: Linie
- 24: Bildebene
- 26: Fokus
- 28: transformiertes Bild
- 30: Horizontlinie
- 32: Bereich
- 34: Parallelseite
- 36: Parallelseite
- 40: Differenzbild
- 42: keilförmiger Bereich
- 44: Randbereich
- 46: Bereich
- 48: Gerade

## Patentansprüche

1. Verfahren zur Erkennung eines sich in einem Fahrweg eines Kraftfahrzeugs (10) befindlichen Hindernisses (12), insbesondere einer Person, bei dem
mittels einer Kamera (14) ein erstes Bild (16) und zeitlich dazu beabstandet ein zweites Bild (16) der in Fahrtrichtung liegenden Umgebung des Kraftfahrzeugs (10) aufgenommen werden,
ein erstes transformiertes Bild (28) durch Projektion des ersten aufgenommenen Bildes (16) aus der Kamerabildebene (24) in die Ebene des Erdbodens (20) und ein zweites transformiertes Bild (28) durch Projektion des zweiten aufgenommenen Bildes (16) aus der Kamerabildebene (24) in die Ebene des Erdbodens (20) erzeugt werden,
ein Differenzbild (40) aus dem ersten und zweiten transformierten Bild (28) ermittelt wird, und
durch Auswertung des Differenzbildes (40) ermittelt wird, ob sich ein Hindernis (12) im Fahrweg des Fahrzeugs (10) befindet.

2. Verfahren nach Anspruch 1,
**dadurch gekennzeichnet ,**
**dass** die Bilder (16) mittels einer Monokamera (14) aufgenommen werden.

3. Verfahren nach einem der vorherigen Ansprüche,
**dadurch gekennzeichnet ,**
**dass** die Fahrzeugbewegung, insbesondere die Fahrzeuggeschwindigkeit und/oder eine Fahrtrichtungsänderung, bei der Erzeugung der transformierten Bilder (28) berücksichtigt wird.

4. Verfahren nach einem der vorherigen Ansprüche,
**dadurch gekennzeichnet ,**
**dass** die Fahrzeugbewegung, insbesondere die Fahrzeuggeschwindigkeit und/oder eine Fahrtrichtungsänderung, und der zeitliche Abstand, mit dem die Bilder (16) aufgenommen wurden, bei der Ermittlung des Differenzbildes (40) berücksichtigt werden.

5. Verfahren nach einem der vorherigen Ansprüche,
**dadurch gekennzeichnet ,**
**dass** das erste oder das zweite transformierte Bild (28) entsprechend der Fahrzeugbewegung und des zeitlichen Abstands, mit dem die zugehörigen Bilder (16) aufgenommen wurden, relativ zum zweiten bzw. ersten transformierten Bild (28) verschoben und/oder verdreht wird, um jeweils gleiche Ausschnitte der Fahrzeugumgebung in Deckung zu bringen.

6. Verfahren nach einem der vorherigen Ansprüche,
**dadurch gekennzeichnet ,**
**dass** ein, insbesondere keilförmiges, Objekt (42) des Differenzbildes (40) als Hindernis (12) eingestuft wird.

7. Verfahren nach einem der vorherigen Ansprüche,
**dadurch gekennzeichnet ,**
**dass** ein als Hindernis (12) eingestuftes Objekt (42) des Differenzbildes (40) in die aufgenommenen Bilder (16) zurücktransformiert wird.

8. Verfahren nach einem der vorherigen Ansprüche,
**dadurch gekennzeichnet ,**
**dass** die Kamera (14) so ausgerichtet wird, dass die Horizontlinie (30) durch die aufgenommenen Bilder (16) verläuft.

9. Verfahren nach Anspruch 8,
**dadurch gekennzeichnet ,**
**dass** nur derjenige Bereich (32) eines aufgenommenen Bildes (16) auf den Erdboden (20) projiziert wird, der sich ausgehend von der Horizontlinie (30) unterhalb der Horizontlinie (30) befindet.

10. Verfahren nach Anspruch 8 oder 9,
**dadurch gekennzeichnet ,**
**dass** das Differenzbild (40) ausgehend von einem Rand (36) des Differenzbildes (40) ausgewertet wird, welcher im Bereich der Horizontlinie (30) liegt.

11. Verfahren nach Anspruch 10,
**dadurch gekennzeichnet ,**
**dass** bei Detektion eines Objekts (42) im Bereich der Horizontlinie (30) eine weitere Auswertung des Differenzbildes (40) auf den Bereich (46) des Objekts (42) beschränkt wird.

12. Verfahren nach einem der vorherigen Ansprüche,
**dadurch gekennzeichnet ,**
**dass** ein Bildrauschen des Differenzbildes (40) durch die Berücksichtigung einer tatsächlichen Neigung der Kamera (14) bezüglich des Erdbodens (20) minimiert wird.

13. Verfahren nach Anspruch 12,
**dadurch gekennzeichnet ,**
**dass** die tatsächliche Kameraneigung aus dem Differenzbild (40) bestimmt wird.

14. Verfahren nach Anspruch 12 oder 13,
**dadurch gekennzeichnet ,**
**dass** die Summe der Grauwerte der Pixel des Differenzbildes (40) entlang einer gedachten, vom Fahrzeug (10) ausgehenden und nicht durch ein detektiertes Objekt (42) verlaufenden Linie (12) gebildet und durch Variation der zugrundegelegten Kameraneigung minimiert wird.

15. Verfahren nach Anspruch 14,
**dadurch gekennzeichnet ,**
**dass** die Kameraneigung, die zu einer minimalen Summe der Grauwerte führt, als tatsächliche Kameraneigung betrachtet wird.

16. Verfahren nach einem der Ansprüche 12 bis 15,
**dadurch gekennzeichnet ,**
**dass** das Differenzbild (40) unter Berücksichtigung der tatsächlichen Kameraneigung neu ermittelt und/oder ein nachfolgendes Differenzbild (40) unter Berücksichtigung der tatsächlichen Kameraneigung ermittelt wird.

17. Vorrichtung zur Erkennung eines sich in einem Fahrweg eines Kraftfahrzeugs (10) befindlichen Hindernisses (12), insbesondere einer Person, mit
einer Kamera (14) zur Aufnahme eines ersten Bildes (16) und eines dazu zeitlich beabstandeten zweiten Bildes (16) der in Fahrtrichtung liegenden Umgebung des Kraftfahrzeugs (10),
einer Transformationseinheit zur Erzeugung eines ersten transformierten Bildes (28) durch Projektion des ersten Bildes (16) aus der Kamerabildebene (24) in die Ebene des Erdbodens (20) und eines zweiten transformierten Bildes (28) durch Projektion des zweiten Bildes (16) aus der Kamerabildebene (24) in die Ebene des Erdbodens (20),
einer Differenzbildungseinheit zur Ermittlung eines Differenzbildes (40) aus dem ersten und zweiten transformierten Bild (28), und
einer Auswerteeinheit zur Auswertung des Differenzbildes (40) dahingehend, ob sich ein Hindernis im Fahrweg des Fahrzeugs befindet.
